# EUROPEAN PATENT SPECIFICATION

(11) **EP 4 404 226 B1**
(45) Date of publication and mention of the grant of the patent: **18.03.2026**
(21) Application number: 22889774.0
(22) Date of filing: 19.10.2022
(51) Int. Cl.: H01G 9/02, H01G 9/028, H01G 9/15, H01G 9/145

(54) **SOLID ELECTROLYTIC CAPACITOR**
FESTELEKTROLYTKONDENSATOR
CONDENSATEUR ÉLECTROLYTIQUE SOLIDE

(30) Priority: 04.11.2021 JP 2021180255
(43) Date of publication of application: 24.07.2024
(73) Proprietor: Nippon Chemi-Con Corporation, Tokyo 141-8605 (JP)
(72) Inventor: KOSEKI Kazuya, Tokyo 141-8605 (JP)
(74) Representative: AWA Sweden AB
(86) International application number: PCT/JP2022/038839
(87) International publication number: WO 2023/079953

(56) References cited:
- EP-B1- 1 737 004
- WO-A1-2005/101432
- WO-A1-2015/166842
- CN-B- 105 295 072
- DE-C2- 3 816 035
- JP-A- 2006 190 878
- JP-A- 2016 012 667
- JP-A- 2016 012 667
- US-A1- 2007 287 062
- US-A1- 2017 053 745
- US-A1- 2019 392 994

## Description

### FIELD OF INVENTION

The present disclosure relates to a solid electrolytic capacitor with a solid electrolyte.

### BACKGROUND

In electrolytic capacitors utilizing valve metal such as tantalum, aluminum, and the like, by making the valve metal as an anode-side facing electrode into shapes of a sintered body or etching foil, and the like, to enlarge the surface, the electrolytic capacitors can be downsized and can have large capacity. In particular, since solid electrolyte capacitors in which a solid electrolyte is covered by dielectric oxide film are compact, large capacity, low equivalent series resistance, easy to chip, and suitable for surface mount, they are essential for downsizing, high functionality, and cost reduction of electronic equipment.

Manganese dioxide and 7,7,8,8-tetracyanoquinodimethane (TCNQ) complex are known as the solid electrolytes. In recent years, conductive polymers derived from monomers with n-conjugated double bonds are rapidly becoming popular as the solid electrolytes. For example, the conductive polymer may be poly(3,4-ethylenedioxythiophene) (PEDOT). Conductive polymers express high conductivity when using polyanions such as organic sulfonic acid (PSS) as a dopant and express excellent adhesion to dielectric oxide film in chemical oxidative polymerization or electrolytic oxidative polymerization.

Conductive polymer is held by a separator that prevents short-circuit between an anode and a cathode, is linked between a surface of the dielectric oxide film at the anode side and a surface of the cathode, and forms a conductive path connecting the surface of the dielectric oxide film and the surface of the cathode. Cellulose fiber such as kraft, Manila hemp, esparto, hemp, rayon, and the like is largely used for the separator.

Here, to reduce an ESR which is also called Equivalent Series Resistance, a solid electrolytic capacitor in which metal carbide with low electrical resistivity such as TiC, Wc, and ZrC, is formed on a surface of the cathode foil is proposed (for example, refer Patent Document 1). According to this proposal, the ESR of the solid electrolytic capacitor can be reduced because the adhesion between the metal carbide at the cathode side and the conductive polymer becomes excellent.

There is a problem that, when metal carbide is formed on the surface of the cathode foil, the oxide film gradually grows on the surface of the metal carbide. Therefore, a solid electrolytic capacitor in which carbon is formed on the surface of the cathode foil using dry plating such as ion plating is proposed (for example, refer Patent Document 2). By forming a carbon layer on the surface of the cathode foil, the formation of the oxide film at the cathode side is prevented. EP 1737004 B1 and JP 2016012667 A relate to electrolytic capacitors.

### PRIOR ART DOCUMENT

### PATENT DOCUMENT

Patent Document 1: JP2005-109272A
Patent Document 2: JP2006-190878A

### SUMMARY OF INVENTION

### PROBLEMS TO BE SOLVED BY INVENTION

However, if the solid electrolytic capacitor was exposed under the high-temperature environment of 150 °C or more, it is observed that the ESR significantly increases even when the carbon layer is formed on the surface of the cathode foil. The reason is considered as follows.

That is, the carbon material forming the carbon layer has surface functional groups such as hydroxyl groups on the surface thereof. Furthermore, β-glucose forming the cellulose fiber used in the separator has hydroxyl groups in molecules thereof. In the high-temperature environment of 150 °C or more, the cellulose fiber easily adheres to the carbon layer due to hydrogen bonding between the hydroxyl groups of each other. Next, there is a case in which the conductive polymer held by the cellulose is doped with acid components as dopants. The cellulose fiber is formed by the bonding of β-glucose, that is, 1,4-glycosidic bond, and when this 1,4-glycosidic bond reacts with the acid component doped to the conductive polymer, the bonds between the cellulose fiber is dissolved by hydrolysis reaction.

When the bond between the cellulose fiber dissolves, the cellulose fiber is divided into the cellulose fiber to which the carbon layer is attached and the cellulose fiber to which the carbon layer is not attached. As the cellulose fiber is divided, the linking of the conductive polymer held by the separator is also divided. Accordingly, the conductive path formed by the linking of the conductive polymer is cut. If the conductive path is cut into pieces, an effect of reducing the ESR of the solid electrolytic capacitor based on the adhesion of the conductive polymer and the carbon layer is lost.

In the temperature range of less than 150 °C, the reaction between an acid component doped to the conductive polymer and the 1,4-glycosidic bond of the cellulose fiber is poor. However, when the solid electrolytic capacitor is exposed under the temperature environment of 150 °C or more, the reaction between the acid component doped to the conductive polymer and the 1,4-glycosidic bond of the cellulose fiber is facilitated. Therefore, it is considered that when the solid electrolytic capacitor is exposed under the high-temperature environment of 150 °C or more, the ESR significantly increases even if the carbon layer is formed on the surface of the cathode foil.

The present disclosure has been proposed to solve the above problems, and an objective is to provide an electrolytic capacitor which an increase in ESR is suppressed even under the high-temperature environment.

### MEANS TO SOLVE THE PROBLEM

The solid electrolytic capacitor according to the invention is defined by the features of claim 1. Further embodiments of the invention are defined by the appended claims. To address the above problems, an solid electrolytic capacitor of the present invention includes: anode foil formed of valve action metal and having dielectric oxide film formed on a surface thereof; a cathode body having cathode foil formed of valve action metal and a carbon layer laminated on the cathode foil; a separator including fiber treated with alkali and intervening between the anode foil and the cathode body, wherein the fiber has hydroxyl groups and molecules of the fiber is bonded by 1,4-glycosidic bonds, and a solid electrolyte layer held in the separator and including a conductive polymer doped with acid components.

According to the present invention, since an amount of the hydroxyl groups in the fiber is reduced by using the fiber treated with alkali, it is difficult for the carbon layer to attach to the separator. Therefore, by the acid component doped to the conductive polymer, even if 1,4-glycosidic bonds of the fiber in the separator is cut, it becomes difficult for the separator to be torn into the carbon-layer side and the side apart from the carbon layer. Then, the conductive path formed by the conductive polymer held in the separator will not be cut. Therefore, the increase in the ESR of the solid electrolytic capacitor is suppressed even under the high-temperature environment.

Therefore, if the separator is formed by the fiber having the hydroxyl groups and molecules of the fiber is bonded by 1,4-glycosidic bonds, the present invention can achieve the effect of suppressing the increase in the ESR under the high-temperature environment. Representatively, such fiber may be cellulose fiber treated with alkali. The acid component may be is polystyrene sulfonic acid.

The fiber may be fibrillated. Since the fiber intertwines with each other using fibril, the bonding strength of the fiber of the separator is improved, so that it is difficult for the separator to be torn apart even when a part of the separator is attached to the carbon layer. Therefore, the increase in the ESR of the solid electrolytic capacitor is suppressed even under the high-temperature environment.

The solid electrolytic capacitor may further include electrolytic solution.

### EFFECT OF INVENTION

According to the present disclosure, an increase in the ESR can be suppressed even when the electrolytic capacitor is exposed under the high-temperature environment.

### BRIEF DESCRIPTION OF DRAWINGS

Fig. 1 is the ESR of each of the solid electrolytic capacitor of the example 1, the comparative examples 1 and 2 without electrolytic solution.
Fig. 2 is the increase rate of the ESR of the solid electrolytic capacitors of the examples 1, the comparative examples 1 and 2 without electrolytic solution, based on zero hour.
Fig. 3 is the ESR of each of the solid electrolytic capacitors of the example 1, the comparative examples 1 and 2 with electrolytic solution.
Fig. 4 is the increase rate of the ESR of the solid electrolytic capacitors of the examples 1, the comparative examples 1 and 2 with electrolytic solution, based on zero hour.
Fig. 5 is photographs of the surface of the cathode body of the examples 1 and 2 and the comparative examples 1, 3 and 4.

### EMBODIMENTS

Hereinafter, an electrolytic capacitor and the manufacturing method thereof according to the embodiment of the present disclosure will be described. Note that the present disclosure is not limited to the following embodiments.

### (Overall Configuration)

An electrolytic capacitor is a passive element that gains the capacitance and stores and discharges electric charge by dielectric polarization of dielectric oxide film. The electrolytic capacitor includes anode foil in which dielectric oxide film is formed on a surface, a cathode body, a solid electrolyte layer, and a separator. The anode foil and the cathode body are arranged to face each other, and the solid electrolyte and the separator are intervened between the anode foil and the cathode body. The anode foil and the cathode body are arranged in a laminated-type in which they are laminated alternately via the separator, or arranged in a wound-type in which they are wound via the separator.

The solid electrolyte layer includes conductive polymers. The conductive polymer is held in the separator, arranged to be linked between the dielectric oxide film formed on the surface of the anode foil and the cathode body, forms a conductive path, and acts as a true cathode. The solid electrolyte layer and electrolytic solution can be used together for the electrolytic capacitor, and the electrolytic solution is filled in voids of a capacitor element. The capacitor element is formed by facing the anode foil, which has the dielectric oxide film formed thereon, and the cathode body via the separator, and attaching the conductive polymer can thereto.

### (Electrode Foil)

The cathode body includes cathode foil. The anode foil and the cathode foil of the cathode body are foil bodies formed of valve metal. The valve metal is aluminum, tantalum, niobium, niobium oxide, titanium, hafnium, zirconium, zinc, tungsten, bismuth, and antimony, etc. The purity of the anode foil is desirably 99.9% or more, and the purity of the cathode foil is desirably about 99% or more, however, the anode foil and the cathode foil may include impurities such as silicon, iron, copper, magnesium, and zinc.

An enlarged surface layer with an enlarged surface structure is formed on one surface or both surface of the anode foil and the cathode foil. The enlarged surface layer is formed by electrolytic etching, chemical etching, or sandblasting, and the like, or formed by vapor-depositing or sintering metal particles and the like, on a foil body. That is, the enlarged surface layer is formed by tunnel-shaped pits, spongy pits, or air gaps between dense powder. The electrolytic etching may be DC etching or AC etching in which direct current or alternating current is applied in acidic aqueous solution with halogen ions, such as hydrochloric acid. Furthermore, in the chemical etching, the metal foil is immersed in acidic solution or alkaline solution. Note that the tunnel-shaped pits may be formed in a length that penetrates through the foil or a length that does not reach the center of the foil.

Typically, the dielectric oxide film of the anode foil is oxide film formed on a surface layer of the anode foil. For example, when the anode foil is aluminum foil, the dielectric oxide film is aluminum oxide obtained by oxidizing the surface layer of the enlarged surface layer. The dielectric oxide film is intentionally formed by chemical conversion treatment in which voltage is applied in solution without halogen ions such as aqueous solution of adipic acid, boric acid or phosphoric acid, etc. Also, the oxide film may be naturally or intentionally formed on the surface layer of the cathode foil by this chemical conversion treatment. The natural oxide film that is naturally formed on the surface layer of the cathode foil is formed when oxygen in the air reacts with the cathode foil.

### (Cathode Body)

The cathode body includes a carbon layer in addition to the cathode foil. The carbon layer is laminated on the the cathode foil. The carbon layer is a layer including carbon material. The carbon material is fibrous carbon, carbon powder, or mixtures thereof. It is preferable that the fibrous carbon and the carbon powder is subjected to porous treatment such as activation treatment or opening treatment to form pores.

For example, the carbon powder is natural plant tissue such as coconut shell, synthetic resin such as phenol, activated carbon made from fossil fuel such as coal, coke, and pitch, carbon black such as Ketjen black, acetylene black, channel black, or thermal black, carbon nanohorn, amorphous carbon, natural graphite, artificial graphite, graphitized Ketjen black, or mesoporous carbon, etc. For example, the fibrous carbon is carbon nanotube or carbon nanofiber, etc. The carbon nanotube may be single-walled carbon nanotube with a single layer of a graphene sheet, or multi-walled carbon nanotube (MWCNT) in which two or more layers of graphene sheets are curled up on a same axis and a tube wall forms multiple layers.

This carbon layer is formed on the cathode foil by vacuum vapor-deposition, sputtering, ion plating, CVD, application, electrolytic plating, or electroless plating. In a case of the application, the carbon material is dispersed in a dispersion solvent to form a slurry, and the slurry is applied and dried on the cathode foil by slurry casting, doctor blading, or spray spraying, etc. In a case of the vapor-deposition, the carbon material is evaporated by electrical heating in vacuum or is evaporated by electron beam irradiation in vacuum, and film of the carbon material is formed on the cathode foil. Furthermore, in the case of the sputtering, the cathode foil and a target formed of carbon material are placed in a vacuum container, inert gas is introduced into the vacuum container, and voltage is applied to bombard the target with the plasma inert gas, so that particles of carbon material beaten out from the target is deposited on the cathode foil.

It is preferable to form the carbon layer on the enlarged surface layer of the cathode foil. Furthermore, it is preferable to press the carbon layer on the cathode foil by press processing. In the press processing, a laminate body of the carbon layer and the cathode foil is sandwiched by a press roller, and press linear pressure is applied. The press linear pressure is desirably about 0.01 to 100 t/cm. By performing press processing on the cathode foil formed on the enlarged surface layer of the cathode foil, the carbon layer adheres to the cathode foil, and the ESR of the solid electrolytic capacitor is reduced.

Furthermore, the carbon material included in the carbon layer may be flake or vein graphite and carbon black that is spherical carbon. It is preferable that the flake or vein graphite has an aspect ratio between short and long diameters of 1:5 to 1:100. When the carbon layer including this combination of the carbon material is laminated on the cathode foil, is compressed, and is pressure-welded to the enlarged surface layer, carbon black becomes easier to be rubbed into the enlarged surface layer by graphite. Graphite easily deforms along an uneven surface of the enlarged surface layer and can be easily laminated on the uneven surface. Accordingly, graphite acts as a pressing lid that presses and holds the spherical carbon inside the enlarged surface layer.

### (Solid Electrolyte Layer)

The solid electrolyte layer includes conductive polymers. The conductive polymer is a conjugated polymer doped with acid component as a dopant. The conjugated polymer is obtained by chemical oxidative polymerization or electrolytic oxidative polymerization of monomers with a π-conjugated double bond or derivatives thereof. The conductive polymer exhibits high conductivity by the doping reaction to the conjugated polymer. Known polymers may be used for the conjugated polymer without limitation. For example, the conjugated polymer may be polypyrrole, polythiophene, polyfuran, polyaniline, polyacetylene, polyphenylene, polyphenylenevinylene, polyacene, and polythiophenevinylene, etc. These conjugated polymers may be used in single or or in combination of two or more, and may further be a copolymer of two or more kinds of monomers. Representatively, the conductive polymer may be poly(3,4-ethylenedioxythiophene), which is called PEDOT, doped with polystyrene sulfonic acid (PSS).

Known dopants may be used as the dopant formed by acid without limitation. For example, the dopant may be inorganic acid such as boric acid, nitric acid, and phosphoric acid, and organic acid such as acetic acid, oxalic acid, citric acid, ascot acid, tartaric acid, squaric acid, logisonic acid, croconic acid, salicylic acid, p-toluenesulfonic acid, 1,2-dihydroxy-3,5-benzenedisulfonic acid, methanesulfonic acid, trifluoromethanesulfonic acid, borodisalicylic acid, bisoxalate borate acid, sulfonylimide acid, dodecylbenzenesulfonic acid, propylnaphthalenesulfonic acid, and butylnaphthalenesulfonic acid. Polyanions may be used as the dopant, and the polyanion may be polyvinyl sulfonic acid, polystyrene sulfonic acid, polyallyl sulfonic acid, polyacrylic sulfonic acid, polymethacrylic sulfonic acid, poly (2-acrylamide-2-methylpropanesulfonic acid), polyisoprene sulfonic acid, and polyacrylic acid, polymethacrylic acid, and polymaleic acid, etc. The dopant may be used in single or in combination of two or more. Furthermore, the dopant may also be polymers or monomers.

By impregnating the capacitor element formed by facing the anode foil on which the dielectric oxide film is formed and the cathode body via the separator with dispersion in which the conductive polymer is dispersed, the conductive polymer is held by the separator and is attached to the dielectric oxide film of the anode foil and the cathode body. The solvent of the dispersion may be any solvent if particles or powder of the conductive polymer are dispersed, and water is mainly used. Ethylene glycol may be used as the solvent of the dispersion, if necessary. It was found that when ethylene glycol is used as the solvent of the dispersion, especially the ESR characteristic among the electrical characteristic of the product can be reduced. Note that to improve the impregnation performance and electrical conductivity of the dispersion, various additives may be used for the dispersion, and the dispersion may be neutralized by adding cations.

For the impregnation method of the dispersion of the conductive polymer, the capacitor element may be immersed in the dispersion, or dropwise application or spray application and the like may be employed. Furthermore, the impregnation is not limited to the entire capacitor element, and the capacitor element may be assembled after the anode foil and the cathode body is impregnated with the dispersion. Depressurization process or pressurization process may be performed to facilitate the impregnation of the dispersion to the anode foil and the cathode body, if necessary. This adhesion process may be repeated for multiple times.

### (Electrolytic Solution)

When using the electrolytic solution together, the solvent of the electrolytic solution is not particularly limited, and protic organic polar solvents or aprotic organic polar solvents may be used. The protic polar solvent may be monohydric alcohol, polyhydric alcohol, oxyalcohol compounds, and water, and for example, is ethylene glycol or propylene glycol. The aprotic polar solvent may be sulfones, amides, lactones, cyclic amides, nitriles, sulfoxides, and the like, and for example, is sulfolane, γ-butyrolactone, ethylene carbonate, or propylene carbonate.

A solute included in the electrolytic solution includes anion and cation components, and is typically organic acid such as adipic acid and benzoic acid or salt thereof, inorganic acid such as boric acid and phosphoric acid or a salt thereof, or a composite compound of organic acid and inorganic acid such as borodisalicylic acid or ion-dissociative salt thereof, and is used single or in combination of two or more. At least one salt of the organic acid, the inorganic acid, and the composite compound of organic acid and inorganic acid may be ammonium salt, quaternary ammonium salt, quaternary amidinium salt, amine salt, sodium salt, and potassium salt, etc. Acid that is the anion and base that is the cation may be separately added to the electrolytic solution as solute components.

Furthermore, other additives may be added to the electrolytic solution. The additive may be polyethylene glycol, complex compounds of boric acid and polysaccharides (mannit, sorbit, etc.), complex compounds of boric acid and polyhydric alcohol, borate esters, nitro compounds, phosphate esters, and colloidal silica, etc. These may be used in single or in combination of two or more. The nitro compound suppresses an amount of hydrogen gas produced in the electrolytic capacitor. The nitro compound may be o-nitrobenzoic acid, m-nitrobenzoic acid, p-nitrobenzoic acid, o-nitrophenol, m-nitrophenol, and p-nitrophenol, etc.

After the electrolytic solution was prepared, the electrolytic solution is impregnated in the capacitor element on which the solid electrolyte layer is formed. When impregnating the capacitor element with the electrolytic solution, depressurization process or pressurization process may be performed to facilitate the impregnation, if necessary. The impregnation process may be repeated for multiple times.

### (Separator)

Fiber, which has hydroxyl groups and in which molecules are bonded by 1,4-glycosidic bond, treated with alkali in advance is used as the separator. According to the invention, such fiber are cellulose fiber treated with alkali. Since the fiber is treated with alkali, the hydroxyl groups in the fiber are reduced. When the amount of the hydroxyl group in the fiber decreases, the percentage of the fiber that hydrogen-bonds to the hydroxyl group of the carbon layer decreases. Therefore, it is difficult for the separator to be attached to the carbon layer.

When 1,4-glycosidic bonds present between the molecules of the fiber react with the acid component doped to the conductive polymer and the hydrolysis reaction proceeds, it becomes difficult for the fiber to be divided even if bonds between the fiber is dissolved, if the separator is not attached to the carbon layer. If the division of the fiber does not easily occur, the conductive path which is linked conductive polymers will not be cut. Therefore, the effect of reducing the ESR of the solid electrolytic capacitor based on the adhesion of the conductive polymer and the carbon layer is maintained. That is, the ESR of the solid electrolytic capacitor is suppressed low even when the solid electrolytic capacitor is exposed under the high-temperature environment of 150 °C.

Here, the separator can retain moisture by the hydrogen bonding to the hydroxyl groups and water (H₂O). Accordingly, water absorbency that is an ability to retain moisture has correlation with the number of hydroxyl groups. It is preferable to treat the fiber used for the separator with alkali until the water absorbency of the separator decreases to more than 26 mm/10 min, less than 77 mm/10 min.

When the water absorbency of the separator is less than 77 mm/10 min, the increase in the ESR of the solid electrolytic capacitor is significantly suppressed even under the high-temperature environment. When the water absorbency of the separator is 26 mm/10 min or less, the hydroxyl groups in the fiber decreases excessively due to the alkali treatment, and the fiber itself will have difficulty absorbing water. Therefore, in the solid electrolyte layer formation process, for example, when using the dispersion in which the conductive polymer is dispersed in water, it becomes difficult to impregnate the separator with the conductive polymer, and it becomes difficult to form the conductive path in the separator. Furthermore, when the water absorbency of the separator is 77 mm/10 min or more, the residual amount of the hydroxyl group in the fiber increases, and the attached amount of the separator to the carbon layer increases. Accordingly, the separator may easily divided to the fiber attached to the carbon-layer side and the fiber not attached to the carbon-layer side due to the acid component doped to the conductive polymer.

Note that the water absorbency is measured according to Clemm's method. That is, each separator is cut into a piece of 200 mm in length and 15 mm in width. Up to 30 mm of the separator from the lower portion is immersed to ultra-pure water. 10 minutes from the start of the immersion, the absorbed height from the liquid surface after, that is, the length that has gone up is measured, and the measured value is the water absorbency (mm/10 min). For example, the presence and absence of the separator attached to the carbon layer may be observed by placing still the solid electrolytic capacitor under the temperature environment of 1700 °C for 200 hours, and then dissolving the capacitor element and observing the presence and absence of the fiber attached to the carbon layer.

Furthermore, it is preferable that the fiber of the separator is fibrillated by creating fine fiber branched out from the surface of the original fiber. The fibril can be formed by beating. Since the fibrillated fiber intertwines with each other using fibrillated fine fiber, the rigidity of the separator is improved, and it becomes difficult for the separator to be torn apart even when a part of the separator is attached to the carbon layer. Therefore, the increase in the ESR of the solid electrolytic capacitor is suppressed even under the high-temperature environment.

### (Manufacturing Method)

Such an electrolytic capacitor is manufactured via an anode production process of producing the anode foil, a cathode body production process of producing the cathode body, a capacitor element production process of producing the capacitor element in which the anode foil and the cathode body face with each other, a solid electrolyte layer formation process of forming the solid electrolyte layer on the capacitor element, and an electrolytic solution impregnation process of impregnating the capacitor element on which the solid electrolyte layer is formed with the electrolytic solution.

In the anode production process, valve metal is elongated to form the anode foil, and after forming the enlarged surface layer on the anode foil, the dielectric oxide film is formed on the surface of the enlarged surface layer. In the cathode production process, valve metal is elongated to form the cathode foil, and the enlarged surface layer on the cathode foil. Furthermore, in the cathode body production process, the carbon layer is formed on the cathode foil, and the carbon layer is pressure-welded to the cathode foil by press processing.

The cellulose fiber having the hydroxyl groups is treated with alkali in advance, and the anode foil on which the dielectric oxide film is formed, and a cathode body are laminated via this fiber as the separator. For the laminated-type capacitor element, the anode foil and the cathode bodies are alternately laminated via the separator for multiple layers. For the wound-type capacitor element, the anode foil and cathode body laminated via the separator is wound. In the solid electrolyte layer formation process, the capacitor element is impregnated with the dispersion in which the conductive polymer is dispersed. In the electrolytic solution impregnation process, the capacitor element on which the solid electrolyte layer is formed by the solid electrolyte layer formation process is impregnated with the electrolytic solution.

By this, in this solid electrolytic capacitor, the carbon layer less attaches to the separator, and the conductive path is suppressed from being cut even when the solid electrolytic capacitor is exposed under the high-temperature environment of 150 °C or more and the hydrolysis reaction of the 1,4-glycosidic bond linking the fiber of the separator is facilitated due to the acid component doped to the conductive polymer, so that the increase in the ESR is suppressed.

Hereinafter, the electrolytic capacitor of the present disclosure will be described in more detail based on examples. Note that the present disclosure is not limited to the following examples.

As in below, the solid electrolytic capacitor of the example 1 was produced. Firstly, anode foil and cathode foil were aluminum foil in which a surface thereof was enlarged. The surface enlargement was performed by AC etching process. In the AC etching process, the cathode foil was immersed in acidic aqueous solution with hydrochloric acid having liquid temperature of 25 °C and percent by weight of 8 wt% as a main electrolyte, and current with alternating current of 10 Hz and current density of 0.14 A/cm² was applied to the aluminum foil for about 5 minutes.

To manifest the effect of the carbon layer and the separator, the carbon layer was formed on both the anode foil and the cathode foil. Carbon black was selected for carbon material of the carbon layer. Powder of the carbon black, styrene butadiene rubber (SBR) as a binder, and sodium carboxymethyl cellulose (CMC-Na) aqueous solution as aqueous solution containing dispersing agent were mixed and kneaded to produce a slurry, and the slurry was uniformly applied on the anode foil and cathode foil. Then, the slurry was heated and dried to volatilize the solvent.

After the carbon layer was formed, a pressing process to press the carbon layer to the enlarged surface of the anode foil and the cathode foil was performed. In the pressing process, a laminate of the anode foil and the carbon layer and a laminate of the cathode foil and the carbon layer were each sandwiched by a press roller, and press linear pressure of 5.38 kNcm⁻¹ was applied using a pressing equipment (from Takumi Giken). The diameter of the press roller was 180 mm, the press processing width was 130 mm, and the laminates were transported once at 3 m/min. The anode foil and the cathode foil were each connected by stitch to a tab-shaped lead terminal made of aluminum.

The separator was sandwiched between the anode foil and the cathode foil on which carbon layer had been formed, and they were wound to produce the capacitor element. Here, rayon paper that is cellulose fiber treated with alkali was used as the separator in the solid electrolytic capacitor of the example 1. As a result of measurement, the water absorbency of this rayon paper was 31 [mm/10 min] due to the alkali treatment.

Next, dispersion of the conductive polymer was prepared. The dispersion was formed by dispersing powder of polyethylene dioxythiophene (PEDOT) doped with polystyrene sulfonic acid (PSS) in water. The capacitor element is immersed in this dispersion. During the immersion, pressure of 30 kPA was applied for 5 minutes. Then, the capacitor element was pulled out and dried at 150 °C for 30 minutes. By this, the separator held polyethylene dioxythiophene (PEDOT) doped with polystyrene sulfonic acid (PSS), and the electronic path, which is linked conductive polymer between the anode foil and the cathode foil on which the carbon layer had been formed, was formed.

The capacitor element was inserted into a bottomed cylindrical outer casing, a sealing rubber was attached to an end of an opening, and the casing was sealed by a crimping process. The solid electrolytic capacitor of the example 1 produced as above had a size of 10 mm in diameter and 8 mm in height.

Furthermore, the solid electrolytic capacitors of the example 2 and the comparative examples 1 to 4 were produced. As in the below table 1, the solid electrolytic capacitors of the example 2 and the comparative example 2 to 4 differed in presence and absence of the impregnation of the electrolytic solution and in types of the separator. Furthermore, the example 2 and the comparative examples 3 and 4 included the electrolytic solution impregnation process in which the capacitor element impregnated with the dispersion of the conductive polymer was impregnated with the electrolytic solution. Other production method, production condition, and capacitor structure of the solid electrolytic capacitors of the example 2 and the comparative examples 1 to 4 were the same as the example 1.

**[Table 1]**

| | **Electrolytic Solution** | **Type of Separator** | **Water Absorbency (mm/10 min)** |
|---|---|---|---|
| **Example 1** | **None** | **Rayon Paper Treated with Alkali** | **31** |
| **Comparative Example 1** | **None** | **Manila-paper** | **77** |
| **Comparative Example 2** | **None** | **Nylon** | **26** |
| **Example 2** | **Present** | **Rayon Paper Treated with Alkali** | **31** |
| **Comparative Example 3** | **Present** | **Manila-paper** | **77** |
| **Comparative Example 4** | **Present** | **Nylon** | **26** |

As shown in the table 1, the separator of the example 2 was the rayon paper treated with alkali and had the water absorbency of 31 [mm/10 min], like the example 1. The solid electrolytic capacitor of the example 2 was different from the example 1 in that the electrolytic solution was used together with the conductive polymer. In the electrolytic solution of the example 2 was prepared by adding ethylene glycol as a solvent and ammonium azelate as a solute.

The separator of the comparative example 1 was manila paper that is cellulose fiber not treated with alkali and had the water absorbency of 77 [mm/10 min]. The electrolytic solution was not used in the solid electrolytic capacitor of the comparative example 1, like the example 1. The separator of the comparative example 2 was chemical fiber paper in which nylon fiber as main fiber and fibrillated acrylic fiber are combined, and the water absorbency was 26 [mm/10 min]. The electrolytic solution was not used in the solid electrolytic capacitor of the comparative example 2, like the example 1. The solid electrolytic capacitor of the comparative example 3 had the same separator as the comparative example 1 and used the same electrolytic solution as the example 2 together. The solid electrolytic capacitor of the comparative example 4 had the same separator as the comparative example 2 and used the same electrolytic solution as the example 2 together.

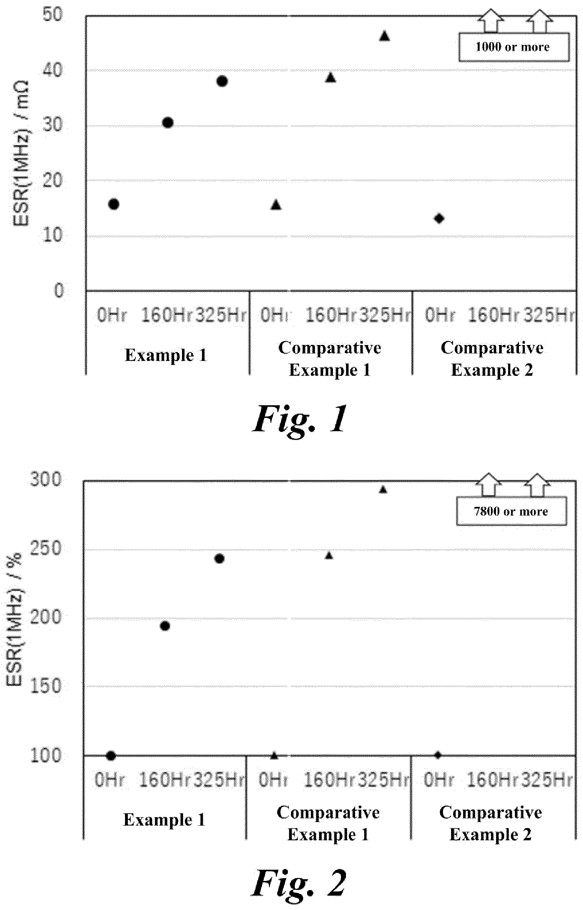

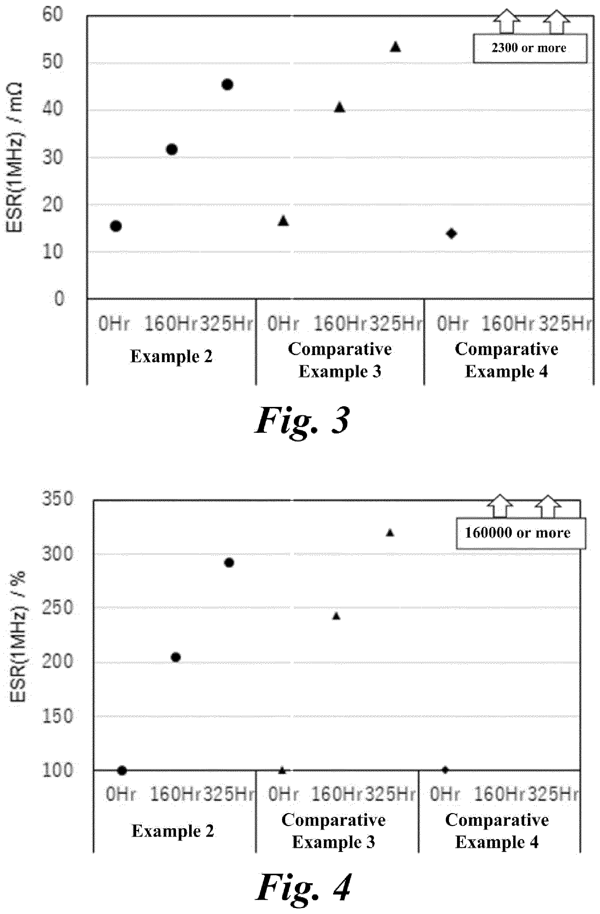

These solid electrolytic capacitors of the examples 1 and 2 and the comparative examples 1 to 4 were exposed under the temperature environment of 170 °C, and the ESR after 0 hour, 160 hours, and 325 hours had elapsed was measured. 0 hour means before exposing the solid electrolytic capacitor under the temperature environment of 170 °C. The measurement results of the ESR are shown in graphs of Figs. 1 to 4. Fig. 1 is the ESR of each of the solid electrolytic capacitor of the example 1, the comparative examples 1 and 2 without electrolytic solution. Fig. 2 is the increase rate of the ESR of the solid electrolytic capacitors of the example 1, the comparative examples 1 and 2 without electrolytic solution, based on zero hour. Fig. 3 is the ESR of each of the solid electrolytic capacitors of the example 2, the comparative examples 3 and 4 with electrolytic solution. Fig. 4 is the increase rate of the ESR of the solid electrolytic capacitors of the example 2, the comparative examples 3 and 4 with electrolytic solution, based on zero hour.

As shown in Figs. 1 to 4, the ESR of the solid electrolytic capacitors of the examples 1 and 2 and the comparative examples 1 to 4 was almost the same at 0 hour. In contrast, it was observed that, after 160 and 325 hours had elapsed, the ESR of all the solid electrolytic capacitor increased, and the ESR of the examples 1 and 2 was maintained lower than the corresponding comparative examples 1 to 4. Note that the ESR pf the comparative examples 2 and 3 after 160 hours had elapsed was 1000 mΩ or more or 2300 mΩ or more.

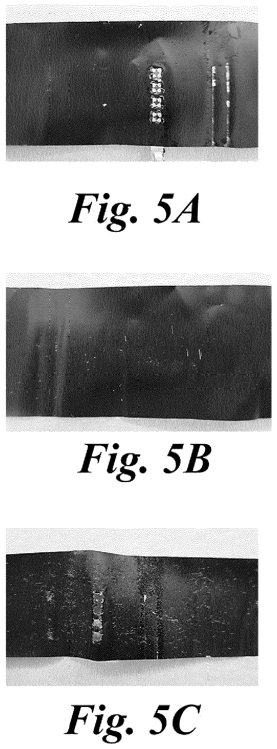

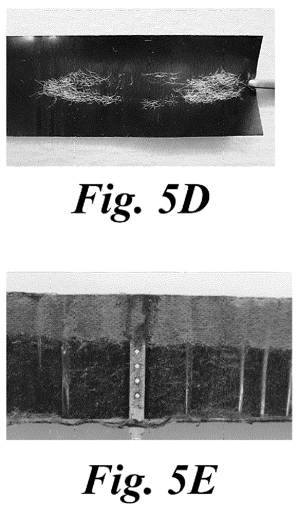

The solid electrolytic capacitors of the examples 1 and 2 and the comparative examples 1, 3 and 4 were exposed under the temperature environment of 170 °C, and then disassembled and photograph of the surface of the cathode body was taken. The examples other than the comparative example 4 were exposed under the temperature environment of 170 °C for 513 hours, and the comparative example 4 was exposed under the temperature environment of 170 °C for 250 hours. The results are shown in Fig. 5. Fig. 5A is the cathode body of the example 1, Fig. 5B is the cathode body of the example 2, Fig. 5C is the cathode body of the comparative example 1, Fig. 5D is the cathode body of the comparative example 3, and Fig. 5E is the cathode body of the comparative example 4.

As shown in the Fig. 5E, the cathode body of the comparative example 4 using the nylon separator not treated with alkali had very large amount of nylon fiber attached thereto. As shown in the Figs. 5C and 5D, the cathode bodies of the comparative examples 1 and 3 using the manila-paper separator not treated with alkali had manila-paper fiber attached thereto, although not as much as the comparative example 4. In contrast, as shown in the Figs. 5A and 5B, the cathode bodies of the examples 1 and 2 using the rayon-paper separator treated with alkali had no rayon-paper fiber attached thereto.

That is, when the fiber not treated with alkali was used as the separator, the bond between the fiber is dissolved, the fiber was divided into the fiber to which the carbon layer was attached and the fiber to which the carbon layer was not attached. In contrast, it was observed that, when the fiber treated with alkali was used as the separator, the fiber was not divided even when the bond between the fiber was dissolved, because it was difficult for the fiber to attach to the carbon layer.

In summary, as illustrated in Figs. 1 to 5, it was observed that, when the fiber not treated with alkali was used as the separator, the fiber was divided into the fiber to which the carbon layer was attached and the fiber to which the carbon layer was not attached, the conductive path formed by linked conductive polymers was cut, and the effect of reducing the ESR of the solid electrolytic capacitor was lost. In contrast, as illustrated in Figs. 1 to 5, it was observed that, when the fiber treated with alkali was used as the separator, since it was difficult for the fiber to attach to the carbon layer, the fiber was not divided, the conductive path formed by the linked conductive polymers was not cut, and the effect of reducing the ESR of the solid electrolytic capacitor was maintained.

## Claims

1. A solid electrolytic capacitor, comprising:
an anode foil formed of valve action metal and having dielectric oxide film formed on a surface thereof;
a cathode body having cathode foil formed of valve action metal and a carbon layer laminated on the cathode foil, the carbon layer having hydroxyl groups on a surface thereof;
a separator including cellulose fibers treated with alkali and intervening between the anode foil and the cathode body, wherein the cellulose fibers have hydroxyl groups and molecules of the cellulose fibers are bonded by 1,4-glycosidic bonds, and
a solid electrolyte layer held in the separator and including a conductive polymer doped with acid components.

2. The solid electrolytic capacitor according to claim 1, wherein the cellulose fibers are fibrillated.

3. The solid electrolytic capacitor according to any one of claims 1 to 2, wherein the acid component is polystyrene sulfonic acid.

4. The solid electrolytic capacitor according to any one of claims 1 to 3, further comprising electrolytic solution.

5. The solid electrolytic capacitor according to any one of claims 1 to 4, wherein the cellulose fibers are treated with alkali until water absorbency of the separator decreases to more than 26 mm/10 min and less than 77 mm/10 min.

## Patentansprüche

1. Festelektrolytkondensator, der umfasst:
eine Anodenfolie, die aus einem Ventilbetätigungsmetall geformt ist; und einen dielektrischen Oxidfilm aufweist,, der auf einer Oberfläche desselben geformt ist;
einen Kathodenkörper, der eine Kathodenfolie, die aus einem Ventilbetätigungsmetall geformt ist, und eine Carbonschicht, die auf der Kathodenfolie laminiert ist, aufweist, wobei die Carbonschicht Hydroxylgruppen auf einer Oberfläche derselben aufweist;
eine Trennvorrichtung, die Cellulosefasern, die mit Alkali behandelt sind, enthält und zwischen der Anodenfolie und dem Kathodenkörper angeordnet ist, wobei die Cellulosefasern Hydroxylgruppen aufweisen, und wobei Moleküle der Cellulosefasern durch 1,4-Glycosid-Bindungen gebunden sind; und
eine Festelektrolytschicht, die in der Trennvorrichtung gehalten wird und ein leitfähiges Polymer, das mit sauren Bestandteilen dotiert ist, enthält.

2. Festelektrolytkondensator nach Anspruch 1, wobei die Cellulosefasern fibrilliert sind.

3. Festelektrolytkondensator nach einem der Ansprüche 1 bis 2, wobei der saure Bestandteil Polystyrolsulfonsäure ist.

4. Festelektrolytkondensator nach einem der Ansprüche 1 bis 3, der ferner eine Elektrolytlösung enthält.

5. Festelektrolytkondensator nach einem der Ansprüche 1 bis 4, wobei die Cellulosefasern so lange mit Alkali behandelt werden, bis die Wasseraufnahmefähigkeit der Trennvorrihctung bis auf mehr als 26 mm/10 min und weniger als 77 mm/10 min abnimmt.

## Revendications

1. Condensateur électrolytique solide, comprenant :
une feuille d'anode formée d'un métal à action de valve et comportant un film d'oxyde diélectrique formé sur une surface de celle-ci ;
un corps de cathode comportant une feuille de cathode formée d'un métal à action de valve et une couche de carbone laminée sur la feuille de cathode,
la couche de carbone comportant des groupes hydroxyle sur une surface de celle-ci ;
un séparateur comprenant des fibres de cellulose traitées avec un agent alcalin et intercalées entre la feuille d'anode et le corps de cathode, dans lequel les fibres de cellulose comportent des groupes hydroxyle et les molécules des fibres de cellulose sont liées par des liaisons 1,4-glycosidiques, et
une couche d'électrolyte solide maintenue dans le séparateur et comprenant un polymère conducteur dopé avec des composants acides.

2. Condensateur électrolytique solide selon la revendication 1, dans lequel les fibres de cellulose sont fibrillées.

3. Condensateur électrolytique solide selon l'une quelconque des revendications 1 à 2, dans lequel le composant acide est l'acide polystyrènesulfonique.

4. Condensateur électrolytique solide selon l'une quelconque des revendications 1 à 3, comprenant en outre une solution électrolytique.

5. Condensateur électrolytique solide selon l'une quelconque des revendications 1 à 4, dans lequel les fibres de cellulose sont traitées avec un alcali jusqu'à ce que l'absorption d'eau du séparateur diminue à plus de 26 mm/10 min et moins de 77 mm/10 min.
